# EUROPÄISCHE PATENTSCHRIFT

(11) **EP 1 433 577 B1**
(45) Veröffentlichungstag und Bekanntmachung des Hinweises auf die Patenterteilung: **16.09.2009**
(21) Anmeldenummer: 02406148.3
(22) Anmeldetag: 27.12.2002
(51) Int. Cl.: B26D 3/16, B23D 21/08, B23D 21/10

(54) **Werkzeug zum Durchtrennen von Rohren**
Tool for cutting through tubes
Outil pour la decoupe de tubes

(43) Veröffentlichungstag der Anmeldung: 30.06.2004
(73) Patentinhaber: GEBERIT TECHNIK AG, 8645 Jona (CH)
(72) Erfinder: Scholz, Jürg, 8841 Gross (CH); Rüesch, Thomas, 8863 Buttikon (CH)
(74) Vertreter: Groner, Manfred

(56) Entgegenhaltungen:
- EP-A- 1 149 666
- DE-A- 19 649 992
- DE-U- 20 003 693
- US-A- 5 206 996
- US-A- 5 218 768
- US-B1- 6 305 087

## Beschreibung

Die Erfindung betrifft ein Werkzeug zum Durchtrennen von Rohren gemäss Oberbegriff des Anspruchs 1.

Für Rohre mit kleinerem Aussendurchmesser werden häufig Trennscheren verwendet, die als Kombinationswerkzeug ausgebildet sind. Ein solches Werkzeuge ist beispielsweise aus der EP 1 149 666 A2 des Anmelders bekannt geworden. Mit einer solchen Trennschere wird ein Rohr von Hand in einer Bewegung durchschnitten. Beim Trennvorgang werden die entstehenden beiden Rohrende in der Regel etwas deformiert. Am Kombinationswerkzeug sind deshalb zwei seitlich vorstehende Dorne vorgesehen, mit denen die Rohrenden kalibriert und angefast werden können. Eine Trennschere ist auch aus der DE 196 49 992 A geworden. Auch bei diesem ist eine frei schneidende Messerklinge vorgesehen, dessen Schneide geradeaus geführt ist. Für Rohre mit grösserem Aussendurchmesser und/oder dickerer Schutzbeschichtung wird vorgeschlagen, die Schneide der Messerklinge schräg zum Zangenschliesswinkel auszuführen, um einen mehr ziehenden Schnitt zu erreichen. Aber auch damit lassen sich Rohre mit einem Durchmesser über etwa 20 mm nur mühsam durchtrennen. Zudem kann hier nicht vermieden werden, dass die Rohre stark gequetscht und damit anschliessend wieder bearbeitet werden müssen.

Zum Durchtrennen von Rohren sind auch sogenannte Rohrabschneider bekannt, mit denen Rohre mit einem Durchmesser von beispielsweise bis 26 mm durchtrennt werden können. Solche Rohrabschneider weisen jeweils eine zustellbare Schneidrolle auf. Das Werkzeug wird um das Rohr herumgedreht und bei jedem Umgang wird die Schneidrolle entsprechend zugestellt. Rohre können damit im Wesentlichen ohne Deformation durchgetrennt werden. Der Rohrschneider muss aber jeweils mehrmals um das Rohr herumgedreht und die Schneidrolle zugestellt werden. Der Arbeitsvorgang dauert wesentlich länger als bei der oben genannten Trennschere.

Einen solchen Rohrabschneider zeigt die US-A-5,206,996. Dieser besitzt ein Rollenmesser, das durch den Druck einer Feder an das schneidende Rohr angepresst wird.

Der Erfindung liegt die Aufgabe zugrunde, dem Rohrmonteur in der Sanitärtechnik und im Heizungsbereich ein Werkzeug zur Verfügung zu stellen, mit dem Leitungsrohre mit einem wesentlich grösseren Dimensionsbereich einfach und schnell durchtrennt werden können.

Die Aufgabe ist durch die Merkmalkombination von Anspruch 1 gelöst. . Mit dem erfindungsgemässen Werkzeug werden die Rohre somit in zwei Bearbeitungsschritten durchtrennt. In einem ersten Schritt wird das Rohr am Umfang wenigstens teilweise geschnitten und in einem zweiten Bearbeitungsschritt durchgedrückt. Das Schneiden des Rohres an seinem Umfang wird durch die bewegliche Lagerung des Schneidmessers an einem Zangenschenkel ermöglicht. Beim Schneidvorgang kann das Messer am Umfang des Rohres ohne Ziehen geschnitten werden. Das Schneidmesser dringt hierbei in das Rohr ein. Das bereits teilweise geschnittene Rohr kann dann durchgedrückt werden, wobei das Werkzeug hier nun als Trennschere dient. Rohre mit einem vergleichsweise kleinen Aussendurchmesser können mit dem Werkzeug auch in einem einzigen Bearbeitungsgang durchgedrückt werden. Bei Rohren mit einem grösseren Durchmesser, erfolgt das Durchtrennen jedoch in den genannten beiden Bearbeitungsschritten. Das erfindungsgemässe Werkzeug ergibt eine höhere Schneidwirkung bei geringerer Deformation der Rohre und ist trotzdem kompakt und handlich.

Das Schneiden des Rohres im ersten Bearbeitungsschritt kann dann besonders wirksam durchgeführt werden, wenn gemäss einer Weiterbildung der Erfindung das Schneidmesser einen bogenförmigen Schneidbereich aufweist. Das Schneidmesser kann am Umfang des Rohres beim Schneidvorgang abrollen und mit der Schneidkante in das Rohr eindringen.

Ist nach einer Weiterbildung der Erfindung das Schneidmesser ringförmig ausgebildet, so ist eine besonders kompakte und handliche Ausführung möglich. Trotzdem können Rohre mit grossem Aussendurchmesser durchgetrennt werden. Alternativ ist dies auch möglich, wenn gemäss einer Weiterbildung der Erfindung das Schneidmesser teilkreisförmig ausgebildet und schwenkbar gelagert ist. Das Schneidmesser bildet hierbei eine Wippe.

Eine besonders einfache Bearbeitung ergibt sich dann, wenn gemäss einer Weiterbildung der Erfindung das Rohrlager als Rollenlager ausgebildet ist. Das Werkzeug kann in diesem Fall mit wenig Reibung und damit mit einem kleineren Drehmoment um das Rohr gedreht werden.

Weitere vorteilhafte Merkmale ergeben sich aus den abhängigen Patentansprüche, der nachfolgenden Beschreibung sowie der Zeichnung.

Ein Ausführungsbeispiel der Erfindung wird nachfolgend anhand der Zeichnung näher erläutert. Es zeigen:
- Figur 1: eine Ansicht eines erfindungsgemässen Werkzeugs,
- Figur 2: eine weitere Ansicht des Werkzeugs gemäss Figur 1, wobei zur besseren Sichtbarkeit des Schneidmessers Teile weggelassen sind,
- Figur 3: ein Schnitt entlang der Linie III-III der Figur 2,
- Figur 4: eine Ansicht des Werkzeugs gemäss Figur 1, jedoch nach dem Durchtrennen eines Rohres,
- Figur 5: eine weitere Ansicht des Werkzeugs gemäss Figur 4,
- Figur 6: eine Ansicht eines erfindungsgemässen Werkzeugs gemäss einer Variante,
- Figur 7: eine Ansicht des Werkzeugs gemäss Figur 6, wobei zur besseren Sichtbarkeit des Schneidmessers Teile weggelassen sind,
- Figur 8: eine Ansicht des Werkzeugs gemäss Figur 6, jedoch im geschlossenen Zustand nach dem Durchtrennen eines Rohres und
- Figur 9: eine weitere Ansicht des Werkzeugs gemäss Figur 8.

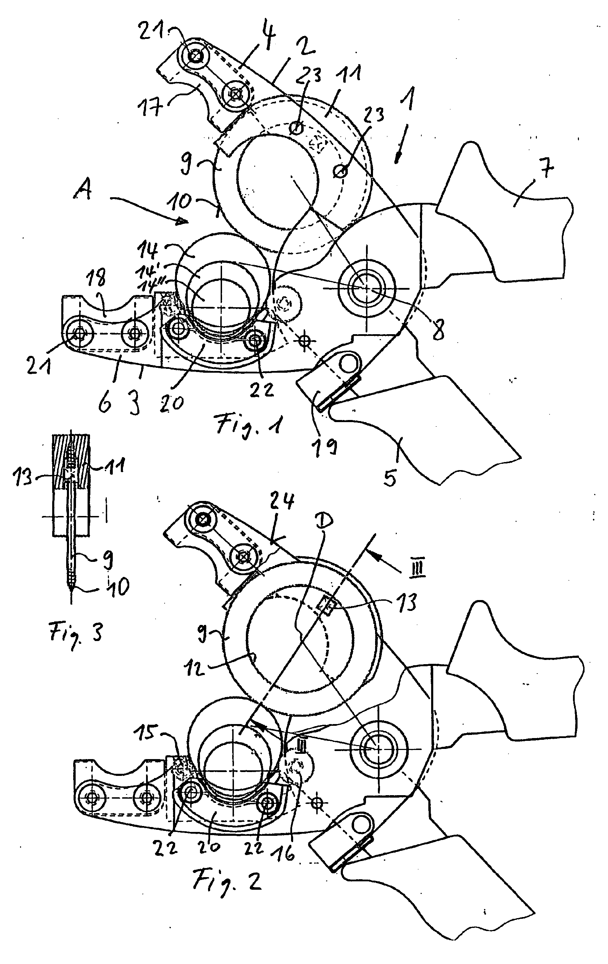

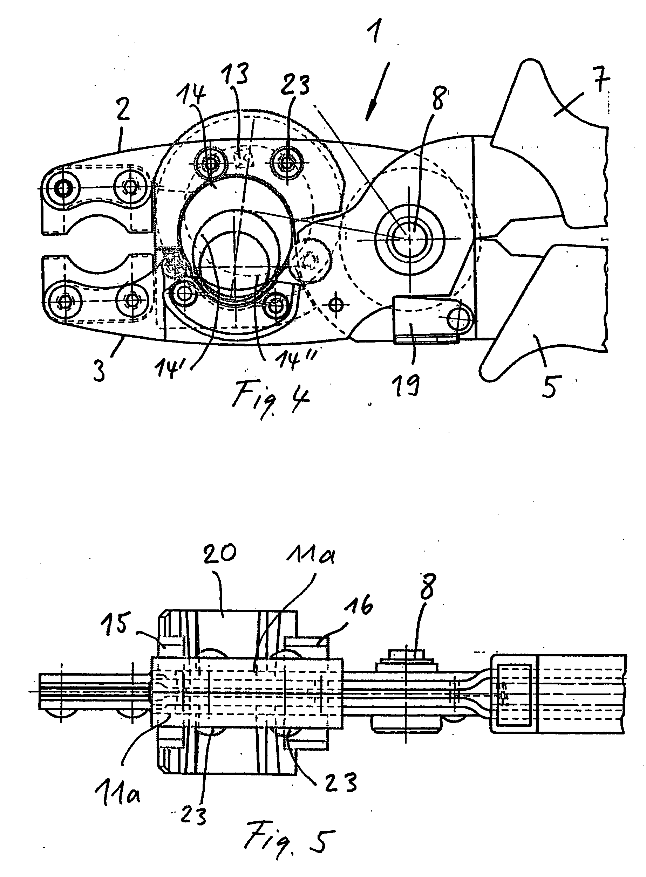

Das in Figur 1 gezeigte Werkzeug 1 ist ein von Hand zu betätigendes Werkzeug und weist zwei Zangenschenkel 2 und 3 auf, die um eine gemeinsame Gelenkachse 8 gegeneinander verschwenkbar sind. Zum Schliessen der Zangenschenkel 2 und 3 weisen diese jeweils einen Griff 5 bzw. 7 auf. Diese Griffe 5 und 7 sind lediglich teilweise dargestellt. Zur Feststellung des Werkzeugs 1 in der geschlossenen Position gemäss der Figur 4 ist am Griff 5 ein schwenkbarer Riegel 19 angeordnet.

Am Zangenschenkel 3 ist eine schalenförmige Rohrführung 20 befestigt, in die ein zu bearbeitendes Rohr 14 eingelegt werden kann. Die Rohrführung 20 ist mit zwei Schrauben 22 am Zangenschenkel 3 befestigt und kann ausgewechselt werden. In der Führung 20 sind im Abstand zueinander zwei Führungsrollen 15 und 16 angeordnet, an denen gemäss den Figuren 1 und 2 ein Rohr 14 drehbar gelagert ist, das einen vergleichsweise grossen Aussendurchmesser, von beispielsweise mehr als 20 mm aufweist. Rohre 14' mit mittlerem Aussendurchmesser und kleinere Rohre 14'' liegen ausserhalb der Bereiche der Führungsrollen 15 und 16. Der Aussendurchmesser des kleineren Rohres 14" beträgt beispielsweise 16 mm. Die Rohre 14, 14' und 14'' sind insbesondere Wasserrohre der Sanitärtechnik, die in an sich bekannter Weise und hier nicht dargestellt eine mittlere Schicht aus Aluminium, eine innere Schicht aus einem Kunststoff sowie eine äussere Schicht ebenfalls aus Kunststoff aufweisen. Solche Rohre sind biegbar und zur Herstellung einer Pressverbindung plastisch verformbar. Solche Rohre 14 sind vielfach von einem hier nicht gezeigten Wellrohr aus Kunststoff umgeben. Um solche Wellrohre durchzuschneiden, weist das Werkzeug 1 Bearbeitungsteile 17 und 18 auf, die mit Klemmschrauben 21 auswechselbar an den Zangenschenkeln 2 und 3 befestigt sind und die einen zweiten Wirkbereich bilden. Das Werkzeug 1 ist ein Kombinationswerkzeug. Die Bearbeitungsteile 17 und 18 sind jedoch nicht zwingend und können auch weggelassen oder durch andere Bearbeitungsteile ersetzt sein.

Der Zangenschenkel 2 weist einen Messerschutz 11 auf, der gemäss Figur 5 mit zwei Schrauben 23 befestigt ist. Zwischen den plattenförmigen Zangenschenkeln 2 ist ein ringförmiges Messer 9 drehbar auf einer Führungsschiene 12 gelagert. Dieses ringförmige Messer 9 weist aussenseitig und wenigstens bereichsweise einen Schneidbereich 10 auf, der als Schneidkante ausgebildet ist. Wie insbesondere die Figur 2 zeigt, überragt das Messer 9 die Rückseite 24 des Zangenschenkels 2. Dies hat den Vorteil, dass der Drehpunkt D des Messers 9 vergleichsweise weit aussen positioniert ist und das Messer 9 lediglich einen Teilbereich des Zangenmaulbereichs A einnimmt. Damit können auch Rohre 14 mit einem vergleichsweise grossen Aussendurchmesser bearbeitet werden, ohne dass das Werkzeug 1 sehr gross ausgebildet sein muss.

Um ein Rohr 14, 14' oder 14" durchzutrennen, wird dieses gemäss Figur 1 in die Führung 20 eingelegt. Hierbei ist der Zangenmaulbereich A gemäss Figur 1 entsprechend geöffnet. Das Messer 9 wird mit dem Schneidbereich 10 an den Umfang des Rohres 14, 14' bzw. 14'' durch entsprechendes Schliessen des Werkzeuges 1 angelegt. Unter Beibehaltung des Anpressdruckes wird nun das Werkzeug 1 um die Längsachse des Rohres 14, 14' bzw. 14" gedreht, wobei das Messer 9 in das Rohr 14, 14' bzw. 14" einschneidet, wobei das beweglich gelagerte Messer 9 am Umfang des Rohres 14, 14' bzw. 14" abrollt. Das Messer 9 dreht somit in der Führungsscheibe die von einer Achse 13 gehalten ist-. Das Werkzeug 1 wird hierbei beispielsweise lediglich um 90° gedreht. Durch Zurückdrehen und wieder nach vorne Drehen schneidet das Messer 9 immer tiefer in das Rohr 14, 14' bzw. 14" ein. Ist eine gewisse Tiefe des Einschnittes erreicht, so wird das Werkzeug 1 als Zange bzw. Schere verwendet und das Rohr 14, 14' bzw. 14" durch Schliessen des Werkzeugs 1 vollständig durchgedrückt. Die Figur 4 zeigt das Werkzeug 1 in geschlossenem Zustand. Das Rohr 14, 14' bzw. 14" ist hierbei vollständig durchtrennt. Das Werkzeug 1 kann wieder geöffnet und an ein weiteres Rohr angesetzt werden.

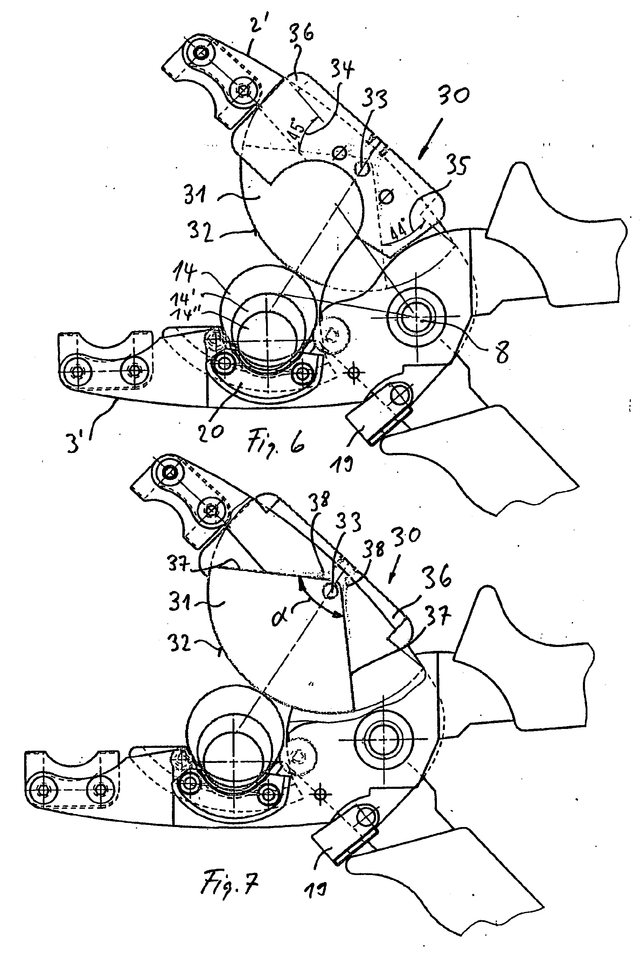

Die Figuren 6 bis 9 zeigen ein erfindungsgemässes Werkzeug 30, das gleich verwendet wird wie das Werkzeug 1 und einen Zangenschenkel 2' sowie einen Zangenschenkel 3' aufweist. Am Zangenschenkel 3' ist die oben erwähnte Zangenführung 20 befestigt, in welche das zu durchtrennende Rohr 14, 14' bzw. 14" einzulegen ist. Am Zangenschenkel 2' ist ein Schneidmesser 31 gelagert, das zwischen zwei Platten 36 schwenkbar um eine Achse 33 gelagert ist. Das Messer 31 besitzt eine bogenförmige Schneidkante 32, die sich zwischen zwei im Wesentlichen radial verlaufenden Kanten 37 erstreckt. Der Winkel α zwischen diesen beiden Kanten 37 ist wie ersichtlich etwas grösser als 90°. Das Messer 31 ist um die Achse 33 begrenzt verschwenkbar, wobei gemäss Figur 6 ausgehend von der Grundstellung, die durch zwei Blattfedern 38 gehalten wird, gemäss Doppelpfeil 34 um 45° und gemäss Doppelpfeil 35 um 44° verschwenkbar ist. Das Messer 31 bildet damit eine Wippe.

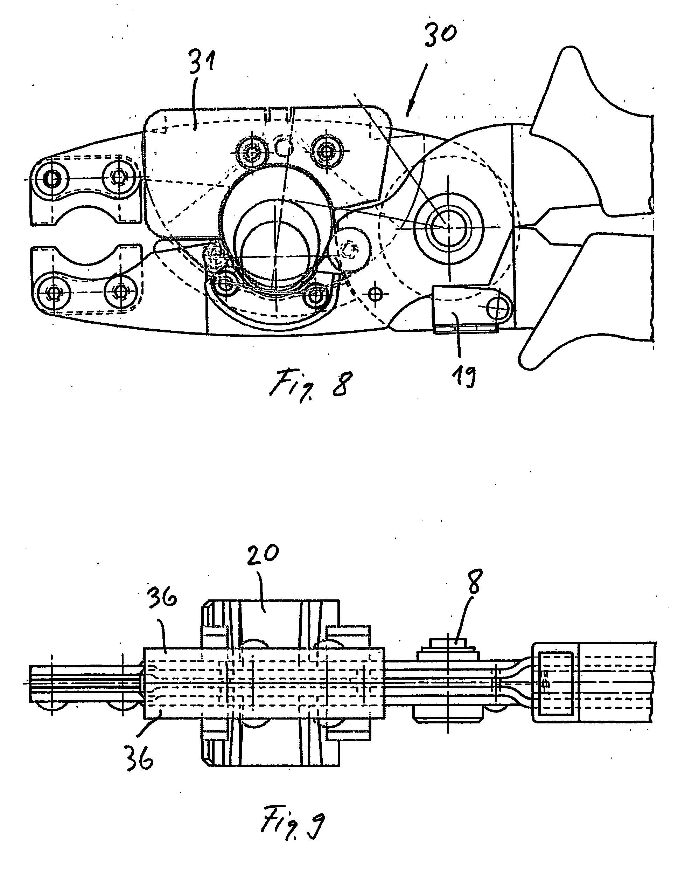

Wie die Figur 7 zeigt, wird das Messer 31 zum Durchtrennen des Rohres 14, 14' bzw. 14" an dieses angelegt. Unter bleibendem Schliessdruck wird das Werkzeug 30 um die Längsachse des Rohres 14, 14' bzw. 14" hin- und herbewegt. Der Drehwinkel liegt hier im Bereich unterhalb von 44 bzw. 45°. Das Messer schneidet mit der Schneidkante 32 in das Rohr 14, 14' und 14" ein. Nach diesen Wippbewegungen wird das Werkzeug 30 als Schere bzw. Zange verwendet und das Rohr 14, 14' bzw. 14" vollständig durchgedrückt. Das Messer 31 durchtrennt hierbei vollständig das Rohr 14, 14' bzw. 14''. Die Figur 8 zeigt das Werkzeug 30 in der geschlossenen Stellung. Das Rohr 14, 14' bzw. 14" ist damit vollständig und glatt durchgetrennt. Das Werkzeug 30 kann nun wieder geöffnet und an ein weiteres Rohr angelegt werden.

Wie insbesondere die Figur 7 zeigt, ist die Drehachse 33 des Messers 31 vergleichsweise weit nach aussen versetzt. Bei einem kreisförmigen Messer wäre dies kaum möglich oder unpraktisch, da dieses auf der Rückseite des Zangenschenkels 2' vorragen würde. Durch die Ausbildung des Messers 31 als Wippe bzw. als Segment ist dies vermieden. Mit einer vergleichsweise kleinen Zange können damit Rohre mit einem Aussendurchmesser von beispielsweise 26 mm durchgetrennt werden.

## Patentansprüche

1. Werkzeug zum Durchtrennen von Rohren, insbesondere Wasserrohre der Sanitär- und Heizungstechnik, mit zwei Zangenschenkeln (2, 2'; 3, 3'), die um eine Gelenkachse (8) zueinander verschwenkbar sind, mit wenigstens einem in einem zangenmaulbereich (A) angeordneten Schneidmesser (9, 31) und einer Rohrführung (20) im Zangenmaulbereich (A), wobei das Schneidmesser (9, 31) beweglich an einem der Zangenschenkel (2, 2'; 3, 3') gelagert ist und mit diesem Schneidmesser (9, 31) das Rohr (14, 14', 14") in einem ersten Bearbeitungsschritt wenigstens teilweise am Umfang schneidbar ist, **dadurch gekennzeichnet, dass** die zwei Zangenschenkel (2, 2'; 3, 3') eine Trennschere bilden, dass das Schneidmesser (9) so ausgebildet ist, dass das Rohr (14, 14', 14") in einem zweiten Bearbeitungsschritt durchdrückbar ist, wobei das Werkzeug in diesem zweiten Bearbeitungsschritt als Trennschere dient und die Zangenschenkel (2, 2'; 3, 3') hierzu an Griffen (5, 7) zusammendrückbar sind.

2. Werkzeug nach Anspruch 1, **dadurch gekennzeichnet, dass** das Schneidmesser (9, 31) einen bogenförmigen Schneidbereich (10, 32) aufweist.

3. Werkzeug nach Anspruch 1, **dadurch gekennzeichnet, dass** das Schneidmesser (9) als Rad ausgebildet ist.

4. Werkzeug nach einem der Ansprüche 1 bis 3, **dadurch gekennzeichnet, dass** das Schneidmesser (9) ringförmig ausgebildet ist.

5. Werkzeug nach einem der Ansprüche 1 bis 3, **dadurch gekennzeichnet, dass** das Schneidmesser (9) an seinem Umfang drehbar gelagert ist.

6. Werkzeug nach Anspruch 5, **dadurch gekennzeichnet, dass** das Schneidmesser (9) zwischen zwei plattenförmigen Führungsteilen (36) gelagert ist.

7. Werkzeug nach Anspruch 1, **dadurch gekennzeichnet, dass** das Schneidmesser (31) schwenkbar an einer Schwenkachse (33) gelagert ist.

8. Werkzeug nach Anspruch 7, **dadurch gekennzeichnet, dass** das Schneidmesser (31) als wippe ausgebildet ist und einen teilkreisförmigen Schneidbereicht (32) aufweist.

9. Werkzeug nach Anspruch 8, **dadurch gekennzeichnet, dass** das Werkzeug (31) zwei im Wesentlichen radial verlaufende Kanten (37) aufweist, zwischen denen der Schneidbereich (32) verläuft.

10. Werkzeug nach einem der Ansprüche 1 bis 9, **dadurch gekennzeichnet, dass** die Rohrführung (20) ein Rollenlager (22) aufweist.

## Claims

1. Tool for cutting through pipes, in particular water pipes in sanitary and heating technology, having two pincer legs (2, 2'; 3, 3') which are pivotable relative to one another about a joint axis (8), having at least one cutting blade (9, 31), arranged in a pincer jaw region (A), and a pipe guide (20) in the pincer jaw region (A), wherein the cutting blade (9, 31) is movably mounted on one of the pincer legs (2, 2'; 3, 3'), and the pipe (14, 14', 14") can be cut at least partly at the circumference in a first working step by this cutting blade (9, 31), **characterized in that** the two pincer legs (2, 2'; 3, 3') form cutting shears, **in that** the cutting blade (9) is designed in such a way that it can press through the pipe (14, 14', 14") in a second working step, wherein the tool serves as cutting shears in this second working step and the pincer legs (2, 2'; 3, 3') can be pressed together at handles (5, 7) for this purpose.

2. Tool according to Claim 1, **characterized in that** the cutting blade (9, 31) has a curved cutting region (10, 32).

3. Tool according to Claim 1, **characterized in that** the cutting blade (9) is designed as a wheel.

4. Tool according to one of Claims 1 to 3, **characterized in that** the cutting blade (9) is of annular design.

5. Tool according to one of Claims 1 to 3, **characterized in that** the cutting blade (9) is rotatably mounted at its circumference.

6. Tool according to Claim 5, **characterized in that** the cutting blade (9) is mounted between two plate-shaped guide parts (36).

7. Tool according to Claim 1, **characterized in that** the cutting blade (31) is pivotably mounted on a pivot axis (33).

8. Tool according to Claim 7, **characterized in that** the cutting blade (31) is designed as a rocker and has a cutting region (32) in the shape of a circle segment.

9. Tool according to Claim 8, **characterized in that** the tool (31) has two essentially radially running edges (37), between which the cutting region (32) runs.

10. Tool according to one of Claims 1 to 9, **characterized in that** the pipe guide (20) has a roller bearing (22).

## Revendications

1. Outil pour découper des tubes, notamment des canalisations d'eau de la technique sanitaire et de chauffage, comprenant deux branches de pinces (2, 2' ; 3, 3'), qui peuvent pivoter l'une par rapport à l'autre autour d'un axe d'articulation (8), avec au moins une lame de coupe (9, 31) disposée dans une région de mors de pince (A) et un guide-tube (20) dans la région de mors de pince (A), la lame de coupe (9, 31) étant montée mobile sur l'une des branches de pince (2, 2' ; 3, 3') et le tube (14, 14', 14'') pouvant être couplé avec cette lame de coupe (9, 31) dans une première étape d'usinage au moins en partie sur sa périphérie, **caractérisé en ce que** les deux branches de pince (2, 2' ; 3, 3') forment des ciseaux de découpage, **en ce que** la lame de coupe (9) est réalisée de telle sorte que le tube (14, 14', 14") puisse être tranché par pression dans une deuxième étape d'usinage, l'outil servant de ciseaux de découpage dans cette deuxième étape d'usinage et les branches de pince (2, 2' ; 3, 3') pouvant à cet effet être pressées l'une contre l'autre au niveau de poignées (5, 7).

2. Outil selon la revendication 1, **caractérisé en ce que** la lame de coupe (9, 31) présente une région de découpage (10, 32) en forme d'arc.

3. Outil selon la revendication 1, **caractérisé en ce que** la lame de coupe (9) est réalisée sous forme de roue.

4. Outil selon l'une quelconque des revendications 1 à 3, **caractérisé en ce que** la lame de coupe (9) est réalisée sous forme annulaire.

5. Outil selon l'une quelconque des revendications 1 à 3, **caractérisé en ce que** la lame de coupe (9) est montée rotative sur sa périphérie.

6. Outil selon la revendication 5, **caractérisé en ce que** la lame de coupe (9) est montée entre deux parties de guidage (36) en forme de plaque.

7. Outil selon la revendication 1, **caractérisé en ce que** la lame de coupe (31) est montée de manière pivotante sur un axe de pivotement (33).

8. Outil selon la revendication 7, **caractérisé en ce que** la lame de coupe (31) est réalisée sous forme de bascule et présente une région de découpage (32) de forme partiellement circulaire.

9. Outil selon la revendication 8, **caractérisé en ce que** l'outil (31) présente deux arêtes (37) s'étendant essentiellement radialement entre lesquelles s'étend la région de découpage (32).

10. Outil selon l'une quelconque des revendications 1 à 9, **caractérisé en ce que** le guide-tube (20) présente un palier à rouleaux (22).
